# EUROPEAN PATENT SPECIFICATION

(11) **EP 2 829 775 B1**
(45) Date of publication and mention of the grant of the patent: **19.10.2016**
(21) Application number: 14177920.7
(22) Date of filing: 22.07.2014
(51) Int. Cl.: B05D 1/26

(54) **Method of injecting sealing gel into recess**
Verfahren zum Einspritzen eines Dichtungsgels in eine Vertiefung
Procédé d'injection de gel d'étanchéité dans un renfoncement

(30) Priority: 22.07.2013 CN 201310308522
(43) Date of publication of application: 28.01.2015
(73) Proprietor: Tyco Electronics (Shanghai) Co., Ltd., Shanghai 200233 (CN)
(72) Inventor: Zhang, Dandan, 200233 Shanghai (CN); Hu, Lvhai, 200233 Shanghai (CN); Xie, Fengchun, 200233 Shanghai (CN)
(74) Representative: Grünecker Patent- und Rechtsanwälte PartG mbB

(56) References cited:
- FR-A1- 2 526 864
- US-A1- 2011 133 409

## Description

### BACKGROUND OF THE INVENTION

### Field of the Invention

The present invention relates to a method of injecting sealing gel into a recess of a work piece, more particularly, relates to a method of injecting a sealing gel into a recess of a work piece to form a predetermined structure defined by sealing gel in the work piece at a local region of the recess.

### Description of the Related Art

In prior arts, a method for injecting a sealing gel into a recess of a work piece generally comprises a step of directly injecting a fluid sealing gel into the recess in an open injection manner that the recess is not enclosed and directly exposed outside. If the recess is continuously uniform, such open injection manner is possible. However, if the recess is not continuously uniform and has a special shape or structure at a local region thereof, it is difficult or even impossible to form the special structure of sealing gel at the local region of the recess, for example, to form a predetermined structure with a special shaped slot. The reasons for this situation is that, in the open injection manner, the fluid sealing gel injected into the recess freely flow in the recess and cannot be constrained to the special shape at the local region of the recess. Thereby, it is impossible to form the special shaped slot at the local region of the recess in such open injection manner. In the prior art, after the sealing gel is directly injected into the recess in such open injection manner, in order to obtain the special shaped slot at the local region of the recess, it needs to cut and grind the solidified sealing gel to remove overflowed or excrescent sealing gel. Accordingly, the method in the prior takes much time and effort, and wastes a lot of sealing gel, increasing the cost.

Methods according to the prior art can be found in documents FR 2 526 864 and US 2011/0133409 A1.

### SUMMARY OF THE INVENTION

The present invention has been made to overcome or alleviate at least one aspect of the above mentioned disadvantages.

Accordingly, it is an object of the present invention to provide a method of injecting a sealing gel into a recess of a work piece. With the method of the present invention, it can easily form a predetermined structure defined by sealing gel at a local region of the recess with less sealing gel and low cost.

According to an aspect of the present invention, there is provided a method of injecting a sealing gel into a recess of a work piece to form a predetermined structure defined by sealing gel at a local region of the recess, comprising steps of:
S100: providing a molding tool having an insertion structure complementary to the predetermined structure;
S200: enclosing the local region of the recess with the molding tool, and injecting a fluid sealing gel into the molding tool; and
S300: after the sealing gel has been cooled and solidified, dismantling the molding tool so that the predetermined structure defined by sealing gel is formed at the local region of the recess.

According to an exemplary embodiment of the present invention, the work piece has a box shaped body, and the recess is formed in a top surface of a side wall of the box shaped body.

According to another exemplary embodiment of the present invention, the predetermined structure comprises at least one vertical slot extending in a height direction of the side wall of the box shaped body; and the insertion structure comprises at least one vertical rib corresponding to the at least one vertical slot.

According to another exemplary embodiment of the present invention, the molding tool comprising: an outside plate for being fitted on an outside surface of the side wall at the local region of the recess; an inside plate for being fitted on an inside surface of the side wall at the local region of the recess; a top cover plate covering top surfaces of the outside plate and the inside plate; and an injection port passing through the top cover plate and being communicated with an inside chamber of the molding tool, wherein the fluid sealing gel is injected into the inside chamber of the molding tool through the injection port.

According to another exemplary embodiment of the present invention, a vent hole is formed in the top cover plate.

According to another exemplary embodiment of the present invention, the insertion structure is formed on at least one of the outside plate, the inside plate and the top cover plate.

According to another exemplary embodiment of the present invention, the insertion structure is formed on the outside plate.

According to another exemplary embodiment of the present invention, before or after injecting the sealing gel into the local region of the recess in an enclosed injection manner that the local region of the recess is enclosed by the molding tool, the other region of the recess except for said local region is injected with the sealing gel in an open injection manner that the other region of the recess is not enclosed and directly exposed outside.

According to another exemplary embodiment of the present invention, the sealing gel has a solid state and a fluid state, and the sealing gel is capable of being converted from the solid state to the fluid state by heating and capable of being converted from the fluid state to the solid state by cooling.

According to another exemplary embodiment of the present invention, the fluid sealing gel is supplied from a gel supply container to a nozzle and injected into the recess through the nozzle.

According to another exemplary embodiment of the present invention, the gel supply container comprising: a heater for heating the sealing gel to convert the sealing gel into the fluid state; and a pump for supplying the fluid sealing gel to the nozzle.

According to another exemplary embodiment of the present invention, the pump is configured to be a speed adjustable pump capable of adjusting the supply speed of the fluid sealing gel.

According to another exemplary embodiment of the present invention, an additional heater is provided on the nozzle to heat the sealing gel in the nozzle so as to prevent the sealing gel in the nozzle from being solidified.

According to another exemplary embodiment of the present invention, the injection of the sealing gel is performed by a multi-freedom robot, and the robot has an end effector on which the nozzle is mounted.

According to another exemplary embodiment of the present invention, the work piece is prefixed on a positioning platform before injecting the sealing gel into the recess.

In various exemplary embodiments of the present invention, the local region of the recess to be formed with the predetermined structure is enclosed by the molding tool having the insertion structure complementary to the predetermined structure. Thereby, simply by injecting the fluid sealing gel into the molding tool, the predetermined structure can be easily formed at the local region of the recess. Furthermore, the sealing gel cannot be overflowed at the local region of the recess, saving the sealing gel and the cost.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative view of a plastic box body fixed on a positioning platform according to an exemplary embodiment of the present invention, in which parts of a molding tool for forming a predetermined structure defined by sealing gel at a local region of a recess of the box body is shown;
Fig.2 is an illustrative view of enclosing the local region of the recess of the box body with the molding tool shown in Fig.1; and
Fig.3 is an illustrative view of an automatic gel injection system according to an exemplary embodiment of the present invention.

### DETAILED DESCRIPTION OF PREFERRED EMBODIMENTS OF THE

### IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a method of injecting a sealing gel into a recess of a work piece to form a predetermined structure defined by sealing gel at a local region of the recess, comprising steps of:
S100: providing a molding tool having an insertion structure complementary to the predetermined structure;
S200: enclosing the local region of the recess with the molding tool, and injecting a fluid sealing gel into the molding tool 2; and
S300: after the sealing gel has been cooled and solidified, dismantling the molding tool so that the predetermined structure defined by sealing gel is formed at the local region of the recess.

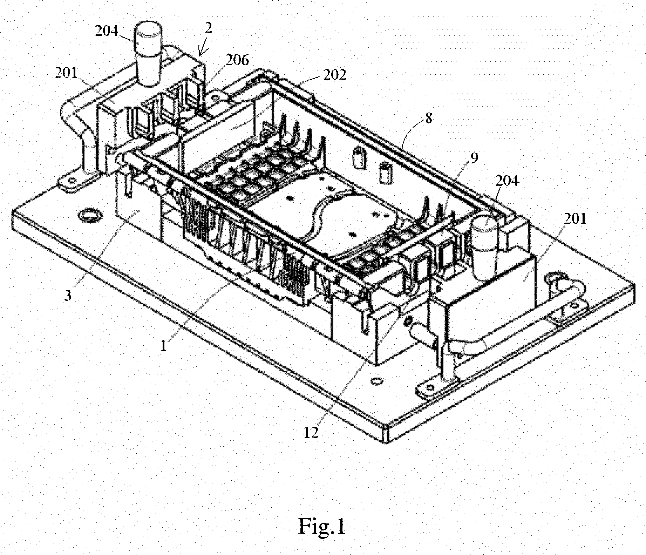

Fig.1 is an illustrative view of a plastic box body 1 fixed on a positioning platform 3 according to an exemplary embodiment of the present invention, in which parts of a molding tool 2 for forming a predetermined structure 12 defined by sealing gel at a local region 9 of a recess 8 of the box body 1 is shown.

As shown in Fig.1, the recess 8 for receiving the sealing gel therein is formed in a top surface of a side wall of the box shaped body (or referred as a work piece herein) 1.

In the illustrated embodiment, there are two local regions 9 of the recess 8 where the predetermined structure 12, which is formed as, for example, a passage for introducing a cable into the box body 1 from outside, is to be formed. The two local regions 9 are symmetrically located at both ends of the box body 1. As shown in Fig.1, the predetermined structure 12 comprises at least one vertical slot extending in a height direction of the side wall of the box body 1. But the present invention is not limited to the illustrated embodiments, the local regions 9 of the recess 8 may be located at any position of the box body 1, and the predetermined structure 12 may comprise any other special structure, such as round hole, curved groove, etc.

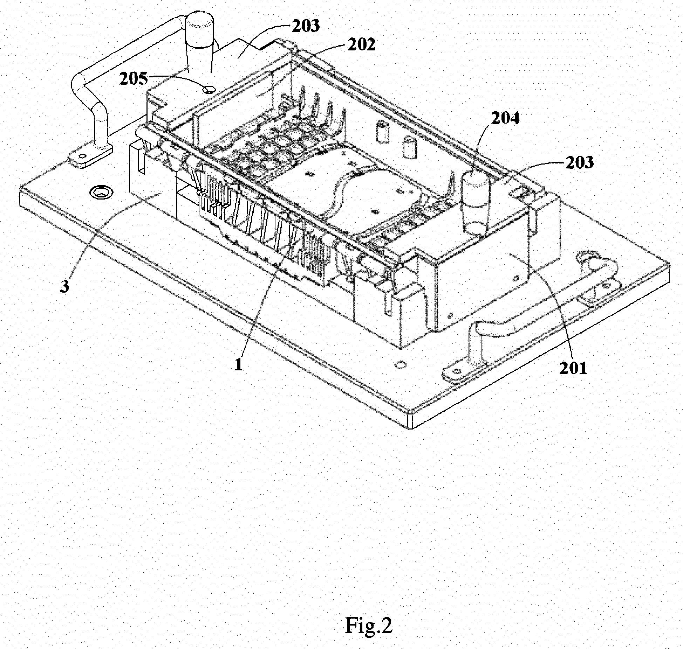

Fig.2 is an illustrative view of enclosing the local region 9 of the recess 8 of the box body 1 with the molding tool 2 shown in Fig.1.

As shown in Fig.1 and Fig.2, the molding tool 2 mainly comprises an outside plate 201, an inside plate 202, a top cover plate 203 (only shown in Fig.2) and an injection port 204.

In the illustrated embodiment of Figs.1-2, the outside plate 201 is configured to be fitted on an outside surface of the side wall at the local region 9 of the recess 8. The inside plate 202 is configured to be fitted on an inside surface of the side wall at the local region 9 of the recess 8. The top cover plate 203 is configured to cover top surfaces of the outside plate 201 and the inside plate 202.

After the outside plate 201, the inside plate 202 and the top cover plate 203 are fitted on the side wall at the local region 9 of the recess 8, the local region 9 of the recess 8 is enclosed by the outside plate 201, the inside plate 202 and the top cover plate 203, achieving a local enclosed gel injection chamber (or referred as "inside chamber" herein) defined by the molding tool 2.

Referring to Figs.1-2 again, the outside plate 201 is formed with an insertion structure 206 complementary to the predetermined structure 12. In the illustrated embodiment, the insertion structure 206 comprises at least one vertical rib vertically extending from a main body of the outside plate 201 and corresponding to the at least one vertical slot, respectively. When the outside plate 201 is fitted on the outside surface of the side wall of the box body 1, the insertion structure 206 is inserted into the local region 9 of the recess 8 to form the predetermined structure 12 complementary to the insertion structure 206.

However, the present invention is not limited to the illustrated embodiments, the insertion structure 206 may be formed on the inside plate 202 or the top cover plate 203.

Please refer to Figs. 1-2 again, the injection port 204 passes through the top cover plate 203 and is communicated with the inside chamber of the molding tool 2, such that the fluid sealing gel can be injected into the inside chamber of the molding tool 2 through the injection port 204.

As shown in Figs.1-2, a vent hole 205 is formed in the top cover plate 203. During injecting the fluid sealing gel into the inside chamber of the molding tool 2, air can be discharged outside the molding tool 2 through the vent hole 205 to prevent air bubbles from being generated in the sealing gel.

Hereafter, it will describe the process of injecting the sealing gel into the local region of the recess with reference to Figs. 1-2.
Firstly, as shown in Fig.1, providing a molding tool 2 having the insertion structure 206 complementary to the predetermined structure 12;
Secondly, as shown in Fig.2, enclosing the local region 9 of the recess 8 with the molding tool 2, and injecting a fluid sealing gel into the molding tool 2; and
Finally, after the injected sealing gel has been cooled and solidified, dismantling the molding tool 2 to form the box body 1.

In this way, the predetermined structure 12 defined by sealing gel is accurately formed at the local region 9 of the recess 8.

In an exemplary embodiment of the present invention, before or after injecting the sealing gel into the local region 9 of the recess 8 in an enclosed injection manner that the local region 9 of the recess 8 is enclosed by the molding tool 2, the other region of the recess 8 except for said local region 9 is injected with the sealing gel in an open injection manner that the other region of the recess 8 is not enclosed and directly exposed outside.

In the present invention, the sealing gel has a solid state and a fluid state, and the sealing gel is capable of being converted from the solid state to the fluid state by heating and capable of being converted from the fluid state to the solid state by cooling.

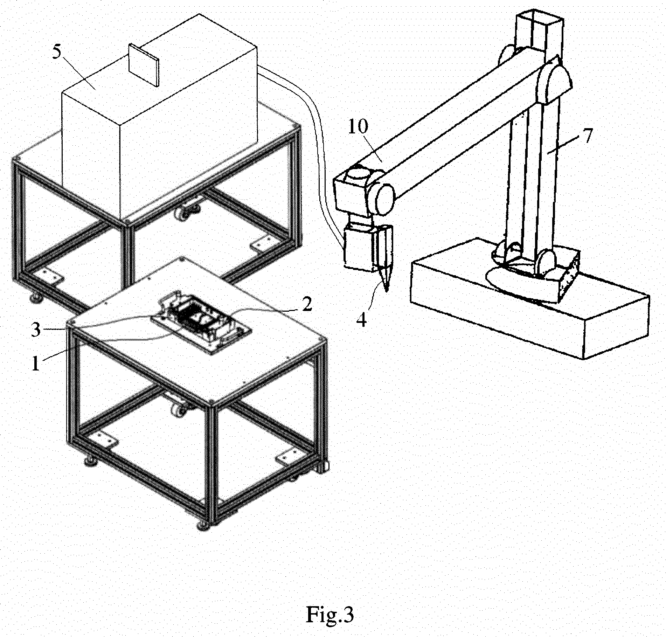

In order to increase the gel injection speed and improve the gel injection accuracy, the injection of the sealing gel is performed by a multi-freedom robot 7. Fig.3 is an illustrative view of an automatic gel injection system according to an exemplary embodiment of the present invention.

As shown in Fig.3, the fluid sealing gel is supplied from a gel supply container 5 to a nozzle 4 and injected into the recess 8 through the nozzle 4.

Although it is not shown, in an exemplary embodiment, the gel supply container 5 comprises a heater for heating the sealing gel to convert the sealing gel into the fluid state and a pump for supplying the fluid sealing gel to the nozzle 4. In this way, it can ensure the sealing gel in the fluid state adapted to be fed by the pump.

In an exemplary embodiment of the present invention, the pump is configured to be a speed adjustable pump capable of adjusting the supply speed of the fluid sealing gel.

Although it is not shown, in an exemplary embodiment, an additional heater is provided on the nozzle 4 to heat the sealing gel in the nozzle 4 so as to prevent the sealing gel in the nozzle 4 from being solidified. In some conditions, the additional heater is necessary, especially in a low temperature condition, since the sealing gel in the nozzle 4 is likely solidified. Once the sealing gel is solidified in the nozzle 4, the nozzle 4 is blocked, and it will cause the entire automatic gel injection system failed. In this way, the additional heater can keep the sealing gel in the fluid state in the nozzle 4 to prevent the nozzle 4 from being blocked.

As shown in Fig.3, the multi-freedom robot 7 has several arms and can move to a predetermined position in three-dimensional space so as to perform an accurate gel injection operation. In an exemplary embodiment, the nozzle 4 is fixed on a end effector 10 of the robot 7 and can move with the end effector 10.

In order to facilitate the positioning of the recess of the box body 1 with respect to the robot 7 in the three-dimensional space, the box body 1 is prefixed on the positioning platform 3 before injecting the sealing gel into the recess 8. The positioning platform 3 is positioned at a preset position with respect to the robot 7. As a result, the robot 7 does not need to identify the positions of the box body 1 and the positioning platform 3, and a great deal of calculation, such as a space coordinate transformation is omitted, saving the time and improving the efficiency.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A method of injecting a sealing gel into a recess of a work piece to form a predetermined structure (12) defined by sealing gel at a local region (9) of the recess (8), comprising steps of:
S100: providing a molding tool (2) having an insertion structure (206) complementary to the predetermined structure (12);
S200: enclosing the local region (9) of the recess (8) with the molding tool (2), and injecting a fluid sealing gel into the molding tool (2); and
S300: after the sealing gel has been cooled and solidified, dismantling the molding tool (2) so that the predetermined structure (12) defined by sealing gel is formed at the local region (9) of the recess (8).

2. The method according to claim 1, wherein the work piece has a box shaped body (1), and the recess (8) is formed in a top surface of a side wall of the box shaped body (1).

3. The method according to claim 2,
wherein the predetermined structure (12) comprises at least one vertical slot extending in a height direction of the side wall of the box shaped body (1); and
wherein the insertion structure (206) comprises at least one vertical rib corresponding to the at least one vertical slot.

4. The method according to claim 3, wherein the molding tool (2) comprising:
an outside plate (201) for being fitted on an outside surface of the side wall at the local region (9) of the recess (8);
an inside plate (202) for being fitted on an inside surface of the side wall at the local region (9) of the recess (8);
a top cover plate (203) covering top surfaces of the outside plate (201) and the inside plate (202); and
an injection port (204) passing through the top cover plate (203) and being communicated with an inside chamber of the molding tool (2),
wherein the fluid sealing gel is injected into the inside chamber of the molding tool (2) through the injection port (204).

5. The method according to claim 4, wherein a vent hole (205) is formed in the top cover plate (203).

6. The method according to claim 4, wherein the insertion structure (206) is formed on at least one of the outside plate (201), the inside plate (202) and the top cover plate (203).

7. The method according to claim 6, wherein the insertion structure (206) is formed on the outside plate (201).

8. The method according to claim 1, wherein
before or after injecting the sealing gel into the local region (9) of the recess (8) in an enclosed injection manner that the local region (9) of the recess (8) is enclosed by the molding tool (2), the other region of the recess (8) except for said local region (9) is injected with the sealing gel in an open injection manner that the other region of the recess (8) is not enclosed and directly exposed outside.

9. The method according to claim 1,
wherein the sealing gel has a solid state and a fluid state, and wherein the sealing gel is capable of being converted from the solid state to the fluid state by heating and capable of being converted from the fluid state to the solid state by cooling.

10. The method according to claim 9, wherein the fluid sealing gel is supplied from a gel supply container (5) to a nozzle (4) and injected into the recess (8) through the nozzle (4).

11. The method according to claim 10, wherein the gel supply container (5) comprising:
a heater for heating the sealing gel to convert the sealing gel into the fluid state; and
a pump for supplying the fluid sealing gel to the nozzle (4).

12. The method according to claim 11, wherein the pump is configured to be a speed adjustable pump capable of adjusting the supply speed of the fluid sealing gel.

13. The method according to claim 12, wherein an additional heater is provided on the nozzle (4) to heat the sealing gel in the nozzle (4) so as to prevent the sealing gel in the nozzle (4) from being solidified.

14. The method according to claim 13,
wherein the injection of the sealing gel is performed by a multi-freedom robot (7), and
wherein the robot (7) has an end effector on which the nozzle (4) is mounted.

15. The method according to claim 2, wherein the work piece is prefixed on a positioning platform (3) before injecting the sealing gel into the recess (8).

## Patentansprüche

1. Verfahren zum Einspritzen eines Dichtungsgels in eine Vertiefung eines Werkstücks, um eine vorgegebene Struktur (12) zu bilden, die durch Dichtungsgel an einem lokalen Bereich (9) der Vertiefung (8) definiert wird, mit den Schritten:
S100: Bereitstellen eines Formungswerkzeugs (2) mit einer Einfügungsstruktur (206), die zu der vorgegebenen Struktur (12) ergänzend ist;
S200: Umschließen des lokalen Bereiches (9) der Vertiefung (8) mit dem Formungswerkzeug (2) und Einspritzen eines Fluid-Dichtungsgels in das Formungswerkzeug (2); und
S300: nachdem das Dichtungsgel abgekühlt und erstarrt ist, Abbauen des Formungswerkzeug (2), so das die vorgegebene Struktur (12), die durch das Dichtungsgel definiert wird, an dem lokalen Bereich (9) der Vertiefung (8) ausgebildet wird.

2. Verfahren nach Anspruch 1, wobei das Werkstück einen schachtelförmigen Körper (1) hat und die Vertiefung (8) in einer oberen Fläche einer Seitenwand des schachtelförmigen Körpers (1) ausgebildet ist.

3. Verfahren nach Anspruch 2,
wobei die vorgegebene Struktur (12) wenigstens einen vertikalen Schlitz umfasst, der sich in einer Höhenrichtung der Seitenwand des schachtelförmigen Körpers (1) erstreckt; und
wobei die Einfügungsstruktur (206) wenigstens eine vertikale Rippe umfasst, die dem wenigstens einen vertikalen Schlitz entspricht.

4. Verfahren nach Anspruch 3, wobei das Formungswerkzeug (2) umfasst:
eine Außenplatte (201), um an eine Außenfläche der Seitenwand an dem lokalen Bereich (9) der Vertiefung (8) angepasst zu werden;
eine Innenplatte (202), um an eine Innenfläche der Seitenwand an dem lokalen Bereich (9) der Vertiefung (8) angepasst zu werden;
eine obere Abdeckplatte (203), die obere Flächen der Außenplatte (201) und der Innenplatte (202) abdeckt; und
ein Einspritzanschluss (204), der durch die obere Abdeckplatte (203) führt und mit einer Innenkammer des Formungswerkzeugs (2) in Verbindung steht,
wobei das Fluid-Dichtungsgel in die Innenkammer des Formungswerkzeugs (2) durch den Einspritzanschluss (204) eingespritzt wird.

5. Verfahren nach Anspruch 4, wobei ein Entlüftungsloch (205) in der oberen Abdeckplatte (203) ausgebildet ist.

6. Verfahren nach Anspruch 4, wobei die Einfügungsstruktur (206) an wenigstens der Außenplatte (201), der in Innenplatte (202) oder der oberen Abdeckplatte (203) ausgebildet ist.

7. Verfahren nach Anspruch 6, wobei die Einfügungsstruktur (206) an der Außenplatte (201) ausgebildet ist.

8. Verfahren nach Anspruch 1, wobei
vor oder nach dem Einspritzen des Dichtungsgels in den lokalen Bereich (9) der Vertiefung (8) in einer umschlossenen Einspritzweise, bei der der lokale Bereich (9) der Vertiefung (8) von dem Formungswerkzeug (2) umschlossen ist, in den anderen Bereich der Vertiefung (8) außer für den lokalen Bereich (9) das Dichtungsgel in einer offenen Einspritzweise eingespritzt wird, bei der der andere Bereich der Vertiefung (8) nicht umschlossen und dem Äußeren direkt ausgesetzt ist.

9. Verfahren nach Anspruch 1,
wobei das Dichtungsgel einen festen Zustand und einen flüssigen Zustand aufweist und wobei das Dichtungsgel vom festen Zustand in den flüssigen Zustand durch Erwärmen umgewandelt werden kann und vom flüssigen Zustand in den festen Zustand durch Abkühlen umgewandelt werden kann.

10. Verfahren nach Anspruch 9, wobei das Fluid-Dichtungsgel von einem Gel-Zuführungsbehälter (5) einer Düse (4) zugeführt und in die Vertiefung (8) durch die Düse (4) eingespritzt wird.

11. Verfahren nach Anspruch 10, wobei der Gel-Zuführungsbehälter (5) umfasst:
eine Heizvorrichtung zum Erwärmen des Dichtungsgels, um das Dichtungsgel in den flüssigen Zustand umzuwandeln; und
eine Pumpe zum Zuführen des Fluid-Dichtungsgels zur Düse (4).

12. Verfahren nach Anspruch 11, wobei die Pumpe konfiguriert so ist, dass sie eine geschwindigkeitseinstellbare Pumpe ist, die die Zuführungsgeschwindigkeit des Fluid-Dichtungsgels einstellen kann.

13. Verfahren nach Anspruch 12, wobei eine zusätzliche Heizvorrichtung an der Düse (4) bereitgestellt wird, um das Dichtungsgel in der Düse (4) zu erwärmen, um so zu verhindern, dass das Dichtungsgel in der Düse (4) aushärtet.

14. Verfahren nach Anspruch 13,
wobei das Einspritzen des Dichtungsgels durch einen Multi-Freiheitsroboter (7) durchgeführt wird und wobei der Roboter (7) ein Endeffektor aufweist, an dem die Düse (4) montiert ist.

15. Verfahren nach Anspruch 2, wobei das Werkstück an einer Positionierungsplattform (3) vorbefestigt wird, bevor das Dichtungsgel in die Vertiefung (8) eingespritzt wird.

## Revendications

1. Procédé d'injection d'un gel d'étanchéité dans un évidement pratiqué dans une pièce de fabrication afin de former une structure prédéterminée (12) définie par le gel d'étanchéité au niveau d'une zone locale (9) de l'évidement (8), comprenant les étapes suivantes :
S100 : la fourniture d'un outil de moulage (2) comportant une structure d'insertion (206) complémentaire de la structure prédéterminée (12),
S200 : la condamnation de la zone locale (9) de l'évidement (8) avec l'outil de moulage (2), et l'injection d'un gel d'étanchéité fluide dans l'outil de moulage (2), et
S300 : le démontage de l'outil de moulage (2) après que le gel d'étanchéité a été refroidi et solidifié de sorte à ce que la structure prédéterminée (12) définie par le gel d'étanchéité soit formée au niveau de la zone locale (9) de l'évidement (8).

2. Procédé selon la revendication 1, dans lequel la pièce de fabrication possède un corps en forme de boîtier (1), et l'évidement (8) est formé sur la surface supérieure d'une paroi latérale du corps en forme de boîtier (1).

3. Procédé selon la revendication 2, dans lequel la structure prédéterminée (12) comprend au moins une fente verticale s'étendant dans la direction de la hauteur de la paroi latérale du corps en forme de boîtier (1), et
dans lequel la structure d'insertion (206) comprend au moins une nervure verticale correspondant à la ou aux fentes verticales.

4. Procédé selon la revendication 3, dans lequel l'outil de moulage (2) comprend :
une plaque externe (201) destinée à être adaptée sur la surface extérieure de la paroi latérale au niveau de la zone locale (9) de l'évidement (8),
une plaque interne (202) destinée à être adaptée sur la surface intérieure de la paroi latérale au niveau de la zone locale (9) de l'évidement (8),
une plaque formant couvercle supérieur (203) recouvrant les surfaces supérieures de la plaque externe (201) et de la plaque interne (202), et
un orifice d'injection (204) traversant la plaque formant couvercle supérieur (203) et entrant en communication avec un compartiment intérieur de l'outil de moulage (2),
dans lequel le gel d'étanchéité fluide est injecté dans le compartiment intérieur de l'outil de moulage (2) au travers de l'orifice d'injection (204).

5. Procédé selon la revendication 4, dans lequel un trou d'aération (205) est formé dans la plaque formant couvercle supérieur (203).

6. Procédé selon la revendication 4, dans lequel la structure d'insertion (206) est formée sur au moins l'une de la plaque externe (201), de la plaque interne (202) et de la plaque formant couvercle supérieur (203).

7. Procédé selon la revendication 6, dans lequel la structure d'insertion (206) est formée sur la plaque externe (201).

8. Procédé selon la revendication 1, dans lequel
avant ou après l'injection du gel d'étanchéité dans la zone locale (9) de l'évidement (8) par injection fermée telle que la zone locale (9) de l'évidement (8) est enfermée par l'outil de moulage (2), l'autre zone de l'évidement (8), différente de ladite zone locale (9), reçoit l'injection du gel d'étanchéité par injection ouverte telle que l'autre zone de l'évidement (8) n'est pas fermée et est directement exposée à l'extérieur.

9. Procédé selon la revendication 1,
dans lequel le gel d'étanchéité présente un état solide et un état fluide, et où le gel d'étanchéité peut être converti de l'état solide à l'état fluide par chauffage, et peut être converti de l'état fluide à l'état solide par refroidissement.

10. Procédé selon la revendication 9, dans lequel le gel d'étanchéité fluide est fourni à partir d'un conteneur d'alimentation en gel (5) à une buse (4), et il est injecté dans l'évidement (8) au travers de la buse (4).

11. Procédé selon la revendication 10, dans lequel le conteneur d'alimentation en gel (5) comprend :
un dispositif de chauffage permettant de chauffer le gel d'étanchéité pour convertir le gel d'étanchéité à l'état fluide, et
une pompe permettant de fournir le gel d'étanchéité fluide à la buse (4).

12. Procédé selon la revendication 11, dans lequel la pompe est configurée pour être une pompe réglable en vitesse pouvant ajuster la vitesse d'alimentation en gel d'étanchéité fluide.

13. Procédé selon la revendication 12, dans lequel un dispositif supplémentaire de chauffage est prévu sur la buse (4) pour chauffer le gel d'étanchéité dans la buse (4) de façon à empêcher la solidification du gel d'étanchéité se trouvant dans la buse (4).

14. Procédé selon la revendication 13,
dans lequel l'injection du gel d'étanchéité est effectuée par un robot à degrés de liberté multiples (7), et où le robot (7) comporte un effecteur terminal sur lequel est montée la buse (4).

15. Procédé selon la revendication 2, dans lequel la pièce de fabrication est fixée à l'avance sur une plate-forme de positionnement (3) avant d'injecter le gel d'étanchéité dans l'évidement (8).
